Europäisches Patentamt

European Patent Office

Office européen des brevets

(11) Publication number: **0 319 280**
**A2**

# EUROPEAN PATENT APPLICATION

(21) Application number: 88311357.3

(51) Int. Cl.⁴: **G06F 15/16**

(22) Date of filing: **30.11.88**

(30) Priority: **30.11.87 JP 304014/87**

(43) Date of publication of application:
**07.06.89 Bulletin 89/23**

(84) Designated Contracting States:
**DE GB**

(71) Applicant: **SHARP KABUSHIKI KAISHA**
**22-22 Nagaike-cho Abeno-ku**
**Osaka 545(JP)**

(72) Inventor: **Kiyohara, Toshimi**
**29-204, 1-2 Ukyo 2-chome**
**Nara-shi Nara-ken(JP)**

(74) Representative: **Brown, Kenneth Richard et al**
**R.G.C. Jenkins & Co. 26 Caxton Street**
**London SW1H 0RJ(GB)**

(54) **Apparatus and system of performing distributed processing based on hierarchy structure.**

(57) An apparatus of performing distributed processing based on a hierarchy structure comprises a main module (3), a peripheral control module (4), a graphic module (5), an input control module (6) and a window control module (7). The main module comprises a main CPU (31) connected to an internal bus (34) and a shared memory 35). The shared memory (35) is connected to a main bus (2). This main bus is connected to a shared memory (46) in the peripheral control module and a shared memory (53) in the graphic module. This shared memory (53) is connected to an image bus (54). This image bus is connected to a shared memory (74) in the window control module and a shared memory (66) in the input control module. Each CPU processes information in a distributed manner through a corresponding shared memory by hierarchical type distributed architecture.

FIG.1

# Apparatus and System of Performing Distributed Processing Based on Hierarchy Structure

## BACKGROUND OF THE INVENTION

### Field of the Invention

The present invention relates generally to an apparatus and a system of performing distributed processing based on a hierarchy structure, and more particularly, to an apparatus and a system of performing distributed processing based on a hierarchy structure, which increase the speed of processing performed by distributing functions of, for example, a computer, an image terminal and a word processor.

### Background Art

Distributed processing is a general name of computer techniques of executing programs while, in a computer system including a plurality of processors, utilizing most suitably various resources distributed in the system. A conventional technique referred to as distributed processing is roughly divided into two types: wide area distributed system technique and distributed machine technique. These two techniques are affected by each other, so that an ideal image of an information processing system in the next generation is to be produced. The wide area distributed system technique centers around a combination of a computer technique and a communication unit technique, while the distributed machine technique achieves function distribution and load distribution to be developed by absorbing the effect of, for example, the impact of an LSI (large-scale integrated circuit) technique. The present invention falls under the classification of the distributed machine technique.

Additionally, manners of the conventional distributed processing are classified as described in the following. More specifically, according to the processing system, the manners are classified into a single load distributed type which is a system in the form in which processors have the same function, to equally share the load, and a two-function distributed type which is a system in the form in which processors respectively have dedicated functions. In addition, according to the coupling system, the manners are classified into a shared memory type and a network type. The shared memory type includes single, multiple and ring buses, a memory switch and a multiport memory. On the other hand, the network type comprises a hierarchy structure (chain coupling, star coupling and tree coupling) and a non-hierarchy structure (ring coupling, lattice coupling, hyper-cube coupling and the like).

The problems of the above described manners will be described by specification. First, in the single load distributed type, the function of a small-sized machine is not suitable in many cases in order to achieve the same function as that of a large-sized machine. In addition, degradation of performance is large which is caused by delay of access at switches which couples many processors to a shared main memory and access contention in the shared main memory. Furthermore, general parallel grouping (load distribution) of a user job is difficult.

On the other hand, in the two-function distributed type, if allocation of a function to each processor is not suitable, overhead which is a problem of communication between processors becomes excessively large at the time of job execution, resulting in an imbalance of the load between the processors provided by function depending on the selection of the processors. In addition, since there is little experience of the use of a technique for dedicating the structured processor, the ratio of cost to performance as a dedicated processor can not be considerably exhibited in some cases.

Then, in the shared memory type, common data access contention occurs if a plurality of processors attempt to simultaneously use the same data, common memory access contention occurs if the processors attempts to simultaneously use different data in the same memory unit, and common bus access contention occurs when the processors and a shared memory are coupled to each other by buses.

Additionally, in the two-network type, the problem of communication between processors is overhead produced by providing a plurality of processors, so that the time required for this communication must be shortened to the utmost.

## SUMMARY OF THE INVENTION

Therefore, an object of the present invention is to provide an apparatus and a system of performing distributed processing based on a hierarchy structure, which can minimize access contention and can minimize overhead which is a problem of communication between processors by directly writing data in a shared memory of destination processors to be communicated.

Briefly stated, according to the present invention, a plurality of central processing means each for individually processing information are distributed by function to be arranged, shared memory means are respectively provided corresponding to the central processing means, a plurality of buses are hierarchically divided in order to connect to each other the central processing means for closely processing information out of the central processing means through the corresponding shared memory means, and information is processed in a distributed manner by a hierarchical type distributed architecture.

Thus, according to the present invention, access contention can be minimized, and overhead which is a problem of communication between processors can be minimized by directly writing data to shared memory means of destination central processing means to be communicated.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic block diagram showing a basic module used in one embodiment of the present invention;

Fig. 2 is a diagram showing one example of a hierarchical type distributed system structured by a plurality of basic modules shown in Fig. 1;

Fig. 3 is a schematic block diagram showing one embodiment of the present invention;

Fig. 4A to 4B are flowcharts for explaining an operation of an input control module;

Figs. 5A and 5B are flowcharts for explaining an operation of a graphic module;

Figs. 6A and 6B are flowcharts for explaining an operation of a main module; and

Fig. 7 is a diagram showing a control sequence among the input control module, the graphic module and the main module.

DESCRIPTION OF THE PREFERRED EMBODIMENTS

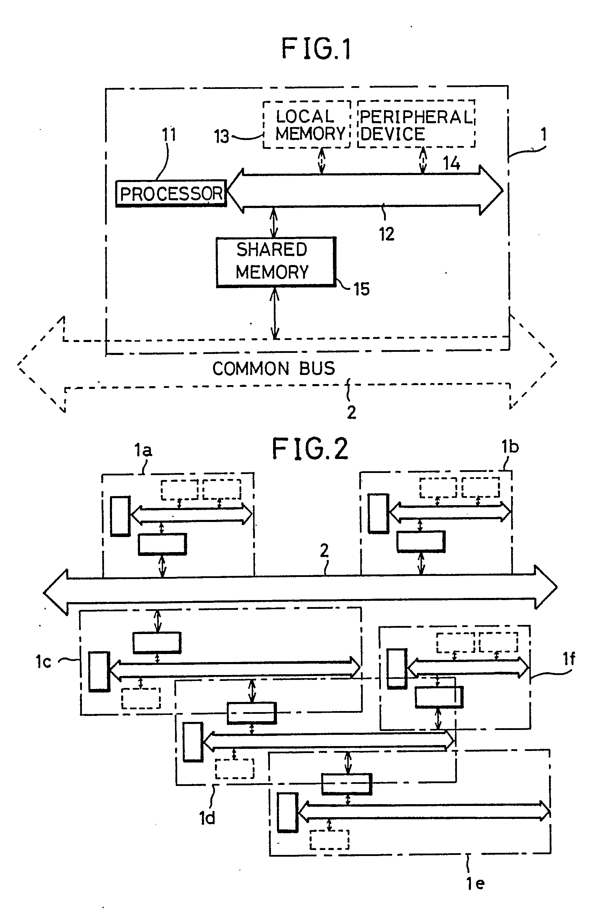

Fig. 1 is a schematic block diagram showing a basic module used in one embodiment of the present invention, and Fig. 2 is a diagram showing one example of a hierarchical type distributed system structured by a plurality of basic modules shown in Fig. 1.

In Fig. 1, a basic module 1 always comprises at least a processor 11, an internal bus 12 and a shared memory 15. The shared memory 15 is connected to the internal bus 12, as well as to a common bus 2. In addition, the basic module 1 comprises a local memory 13, a peripheral device 14 and the like as load functions for distributing functions.

Fig. 2 shows a hierarchical type distributed system structured by basic modules 1a to 1f shown in Fig. 1, in which a hierarchy structure is achieved such that the common bus 2 can be utilized between close processors, and the shared memory 15 is used as an interface when the content of processing is divided into a plurality of processors distributed by function so that division of functions can be changed depending on the content of processing.

A multiplexed bus having a hierarchy structure is used as described above, so that control of the data flow in a multi-CPU (central processing unit) becomes easy due to the hierarchy structure, and the close processors are closely coupled to each other by buses so that contention for the common bus is optimized. In addition, contention can be distributed by the hierarchy structure, so that there occurs no contention for another hierarchy, whereby communication protocols between the processors are optimized every hierarchy. Furthermore, the shared memory 15 is utilized as an interface between the processors, so that division of functions can be dynamically changed according to processing because a program itself is written to the shared memory 15. Additionally, the waiting time for achieving synchronization of the processors, which time is large overhead which is a problem of communication between the processors, can be minimized by utilizing the shared memory 15 as a packet buffer. In addition, the shared memory 15 is allocated to global memory maps through the common bus. Thus, if data is not transferred to a destination shared memory to be communicated, data can be accessed from both the shared memories. That is, the loss of the data transfer time can be removed.

Additionally, a system is configured in a combination of basic modules 1, so that the system can be made compact by using the LSI technique because each of the basic modules comprises the processor 11, the shared memory 15 and the common bus 2 as a minimum unit. Structurally, a hierarchy structure is naturally formed by a combination of the basic modules 1, so that distributed processing can be simply achieved.

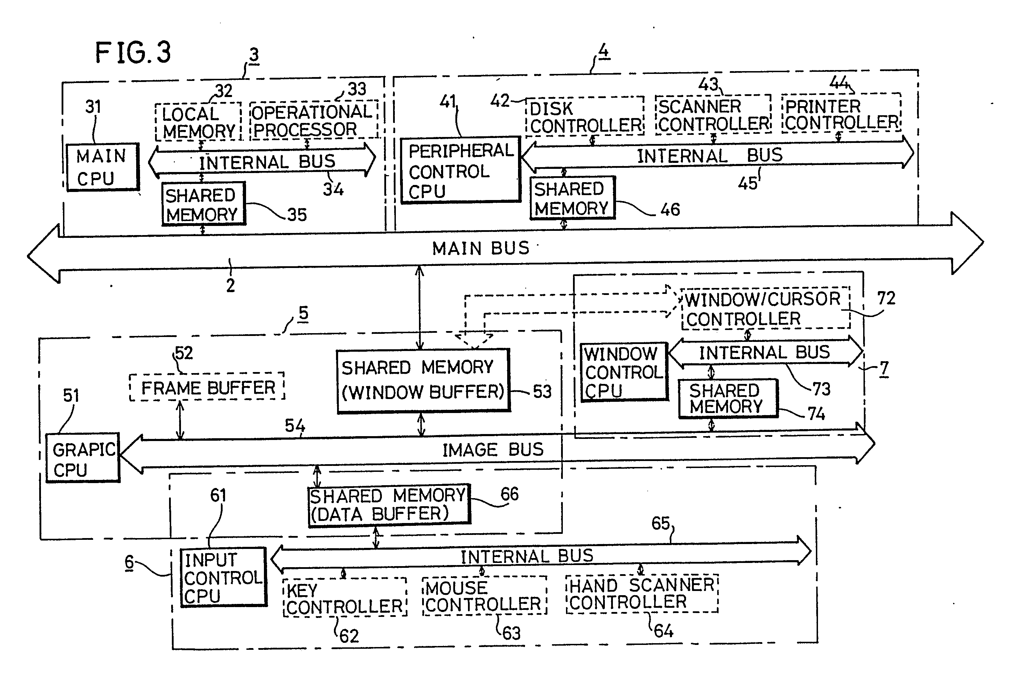

Fig. 3 is a schematic block diagram showing one embodiment of the present invention. Description is now made on a structure according to one embodiment of the present invention. In this example, a basic module comprises a main module 3, a peripheral-control module 4, a graphic module 5, an input control module 6 and a window control module 7.

The main module 3 is equipped with a general-purpose OS (operating system), to control the entire system. Therefore, the main module 3 comprises a main CPU 31, a local memory 32, an operational processor 33 and a shared memory 35 which are connected to an internal bus 34. The shared memory 35 is connected to a main bus 2. The local memory 32 stores a processing program and data executed in only this main module 3 to avoid contention for the shared memory 35. The operational processor 33 supports processing such as floating-point arithmetic. Meanwhile, an LSI and a circuit for supporting the periphery of the main CPU 31, which are not shown, are added.

The peripheral control module 4 comprises a peripheral control CPU 41, a disk controller 42, a scanner controller 43, a printer controller 44 and a shared memory 46 which are connected to an internal bus 45. The shared memory 46 is connected to the main bus 2. The disk controller 42 controls a floppy disk; the scanner controller 43 controls a scanner, and the printer controller 44 controls a printer. The shared memory 46 is utilized as an interface for sending and receiving input/output data and a control command to/from each device, and loading and saving an interface program by control of the main module 3.

The graphic module 5 displays a bit map corresponding to a pixel and controls a window. Therefore, the graphic module 5 comprises a graphic CPU 51, a frame buffer 52 and a shared memory 53 serving as a window buffer which are connected to an image bus 54. The shared memory 53 in this graphic module 5 is utilized as a bit map developing area for printing, a buffer for a window for display and an interface with another module.

The input control module 6 controls of a key, a mouse, a hand scanner and the like, which arranges a redundant information component and transmits the same to the graphic module 5 which is a high order hierarchy. Therefore, the input control module 6 comprises an input control CPU 61, a key controller 62, a mouse controller 63, a hand scanner controller 64, and a shared memory 66 sharing as a data buffer which are connected to an internal bus 65. In this input control module 6, the shared memory 66 is utilized as an interface between modules and a buffer for data.

The window control module 7 allows data from the shared memory 53 in the graphic module 5 to be displayed on a CRT (cathode ray tube) display (not shown), so that an active window is displayed. Therefore, the window control module 7 comprises a window control CPU 71, a window/cursor controller 72, and a shared memory 74 which are connected to an internal bus 73, the shared memory 74 being connected to the image bus 54. Since the window control module 7 comprises the window control CPU 71, processing such as automatic scrolling and real-time zooming up can be achieved without the load of the graphic CPU 51 which is a high order hierarchy. Similarly, with respect to the cursor, the processing can be achieved by exchanging data with the input control module 6 under control of the graphic module 5.

The mutual relation between the modules in the distributed processing apparatus shown in Fig. 3 is hierarchized as described below:

main module 3

   peripheral control module 4

   graphic module 5

      window control module 7

      input control module 6

Distributed processing performed based on a hierarchy structure is divided by a function requiring high speed such as response to human beings, so that an effect is shown. As an example, description is made on an operation to occur when document processing is achieved according to one embodiment of the present invention.

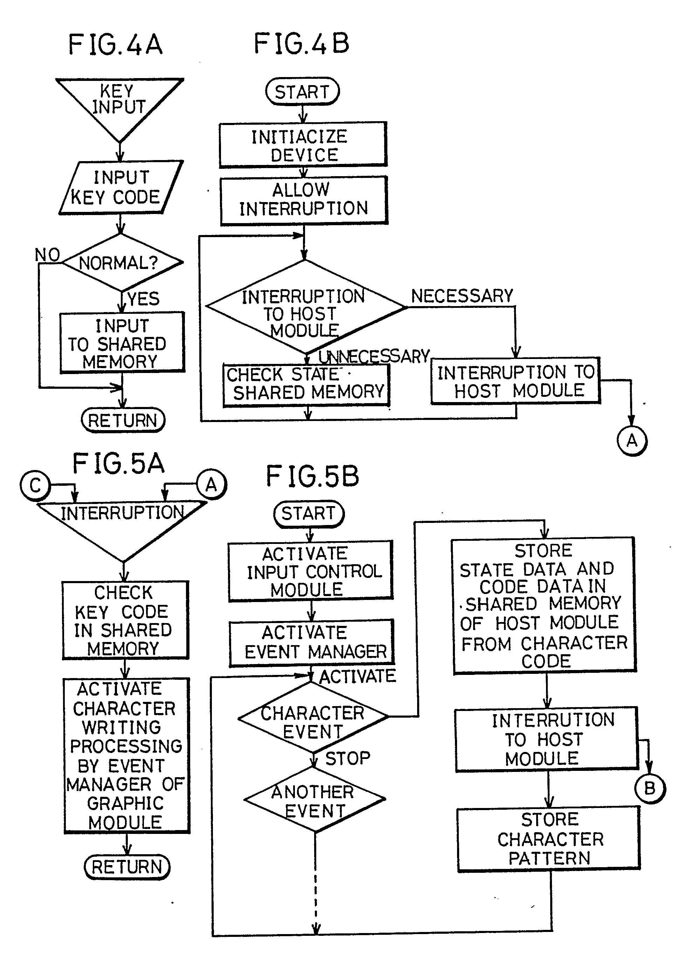

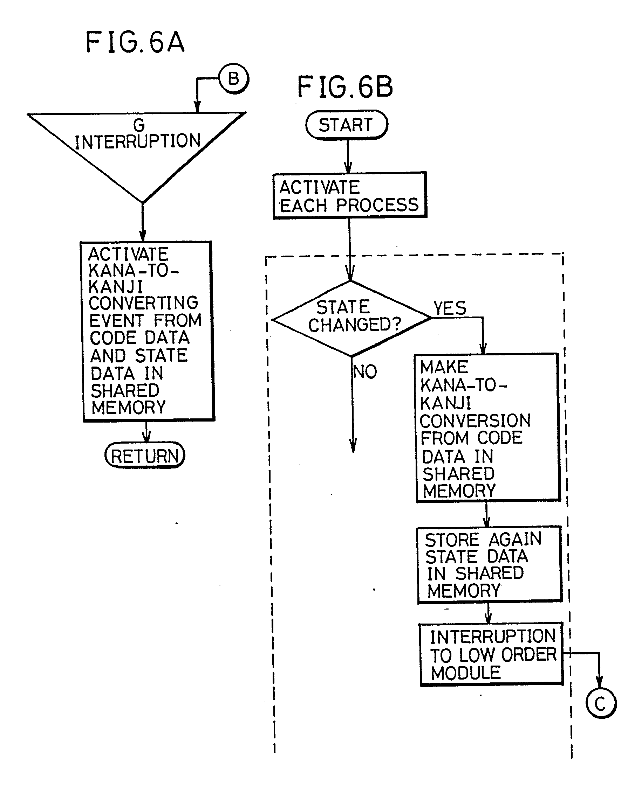

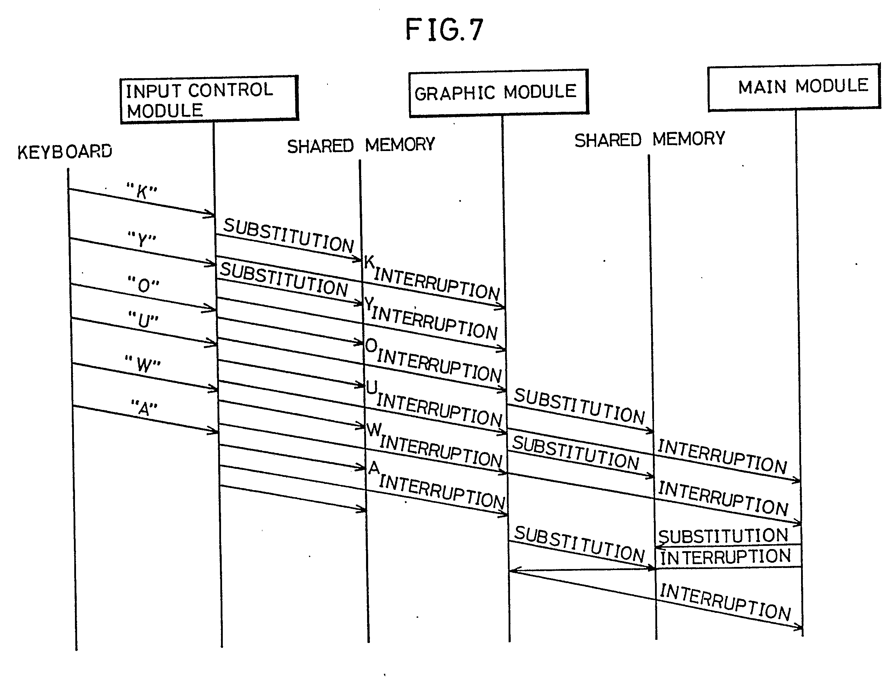

Figs. 4A and 4B are flowcharts for explaining an operation of the input control module, Fig. 5A and 5B are flowcharts for explaining an operation of the graphic module, Figs. 6A and 6B are flowcharts for explaining an operation of the main module, and Fig. 7 is a diagram showing a control sequence among the input control module, the graphic module and the main module.

Referring now to Figs. 3 to 7, description is made on a specific operation according to one embodiment of the present invention. First, a process is taken as an example in which a sentence is formed according to a key code inputted from a keyboard (now shown) when the main module 3 processes a document editor. After the input control CPU 61 initializes each device in accordance with the flowchart of Fig. 4B, the key input control module 6 enters an interruption standby state.

When a key code is inputted to the key controller 62 from the keyboard, an interruption is caused to the input control CPU 61 from the key controller 62, to execute a program shown in Fig. 4A. More specifically, the input control CPU 61 accepts the inputted key code, to determine whether or not the key code is normal. If the key code is not normal, the program is returned to a routine shown in Fig. 4B. On the contrary, if the key code is normal, the inputted key code is stored in the shared memory 66 and then, the program is returned to the routine shown in Fig. 4B. The input control CPU 61 determines according to an interruption from the key controller 62 whether or not an interruption to a host module is required. If the interruption to the host module is not required, the input control CPU 61 checks the state of the shared memory 66. If the interruption to the host module is required, an interruption is caused to the graphic module 5 serving as a host module.

On the other hand, the graphic module 5 executes a program based on the flowchart shown in Fig. 5A. When an interruption is caused from the input control module 6, the graphic module 5 checks the key code stored in the shared memory 66. As a result, character writing processing is activated by an event manager of the graphic module 5, so that the program is returned to a routine shown in Fig. 5B. The graphic CPU 51 determines whether or not a program of a character event is activated. If the program is activated, state data and code data are stored from a character code in the shared memory 35 in the main module 3 which is a host module. Thereafter, an interruption is caused to the main CPU 31 in the main module 3 from the graphic CPU 51. At the same time, Roman letters or kana letters are first displayed in accordance with the inputted character code.

The main module 3 performs processing for a sentence editor, as shown in Fig. 6A. When an interruption is caused from the graphic module 5, the main module 3 activates a Kana-to-Kanji converting event from the code data and the state data in the shared memory 35, so that the program is returned to a routine shown in Fig. 6B. The main CPU 31 is responsive to activation of the Kana-to-Kanji converting event for determining that the state is changed, to make Kana-to-Kanji conversion from the code data in the shared memory 35. Thereafter, the main CPU 31 causes the state data to be stored again in the shared memory 53 in the graphic module 5 and then, an interruption is caused to the graphic module 5.

When an interruption is caused from the main module 3, the graphic module 5 causes a character pattern to be stored in the frame buffer 52 based on the data stored in the shared memory 53.

As described in the foregoing, there are many portions where the main module 3, the graphic module 5 and the input control module 6 perform processing in parallel with each other, so that the speed of the processing is increased, as compared with the processing performed by the conventional single processor. In particular, contention of the shared memories 35, 53 and 66, the main bus 2 and the image bus 54 is decreased due to the hierarchy structure, so that efficient distributed processing can be achieved.

In addition, the present invention is applied to storage, printing, display, edit communication or the like of document data, in which case high-speed processing can be performed.

Additionally, Fig. 3 is shown as one embodiment of the present invention. The present invention can be applied in more hierarchies and modules. In addition, any circuit added to the basic module for distributing functions may be employed.

As described in the foregoing, according to one embodiment of the present invention, since central processing means for closely performing information processing out of a plurality of central processing means are connected to each other through corresponding shared memories and buses so that distributed processing is performed by a hierarchical type distributed architecture, contention of the shared memories and the buses can be decreased, whereby efficient distributed processing can be achieved. Furthermore, improvement of throughput of the entire processing depends on the processing speed of a processor if one task can not be divided. However, with respect to the response speed, information is functionally processed in a distributed manner as in the present invention, so that the information can be processed in response to the level of processing. In addition, improvement of the speed with which highly parallel processing distribution is possible. Furthermore, in the present condition under which diversification of an application environment proceeds, the degree of freedom is obtained of configuring a system in the form satisfying a request from an application side. However, a hierarchy and distributed structure having improved expandability as in the present invention is more preferable than a single system structure. In the case of a single processor, if the processor fails, the entire system is stopped. However, if and when a plurality of central processing means are provided as in the present invention, the fault processor is replaced with normal central processing means, to prevent the entire system from being stopped. In addition, the central processing means are allowed to individually have any one of a plurality of functions such as display and input control, so that the processing ability can be improved. Furthermore, if the function of each central processing means and a mutual interface are defined, various peculiar effects are achieved. For example, individual central processing means and the content of processing can be designed independently of another portion of the system.

Although the present invention has been described and illustrated in detail, it is clearly understood that the same is by way of illustration and example only and is not to be taken by way of limitation, the spirit and scope of the present invention being limited only by the terms of the appended claims.

There are described above novel features which the skilled man will appreciate give rise to advantages. These are each independent aspects of the invention to be covered by the present application, irrespective of whether or not they are included within the scope of the following claims.

## Claims

1. A distributed processing apparatus having a hierarchy structure which processes information in a distributed manner by a hierarchical type distributed architecture, comprising:
a plurality of central processing means (31, 41, 51, 61, 71) distributed by function to be arranged each for individually processing information,
shared memory means (35, 46, 53, 66, 74) respectively provided corresponding to said plurality of central processing means, and
a plurality of buses (2, 34, 45, 54, 65, 73) hierarchically divided so as to connect to each other the central processing means of closely performing information processing out of said plurality of central processing means through the corresponding shared memory means.

2. The distributed processing apparatus according to claim 1, wherein
said plurality of buses comprises internal buses (34, 45, 65, 73) and main buses (2, 54), and
said shared memory means are respectively connected to the corresponding central processing means through said internal buses, as well as to said main buses.

3. The distributed processing apparatus according to claim 2, wherein
said plurality of central processing means comprises main central processing means (31) in the highest hierarchy, central processing means (41) for peripheral control, central processing means (51, 71) for display control and central processing means (61) for input control respectively in lower hierarchies than that of said main central processing means.

4. The distributed processing apparatus according to claim 3, which further comprises controllers (42, 43, 44) for peripheral control respectively connected to said central processing means for peripheral control through the internal bus,
a frame buffer (52) for display connected to said central processing means for display control through the internal bus, and
input controllers (62, 63, 64) connected to said central processing means for input control through the internal bus.

5. The distributed processing apparatus according to claim 4, wherein
said central processing means for input control comprises means for causing interruption to said central processing means for display control in response to input of an input signal from said input controller.

6. A system of performing distributed processing based on a hierarchy structure, wherein
a plurality of central processing means (31, 41, 51, 61, 71) each for individually processing information are distributed by function to be arranged,
shared memory means (35, 46, 53, 66, 74) are respectively provided corresponding to said central processing means, and
the corresponding shared memory means are connected in common to the central processing means of closely performing information processing out of said plurality of central processing means by buses (2, 54), so that each of the central processing means processes information in a distributed manner through each of the shared memory means by hierarchical type distributed architecture.

# FIG.1

# FIG.2

FIG.3

EP 0 319 280 A2

FIG.4A

FIG.4B

FIG.5A

FIG.5B

# FIG.6A

Ⓑ

▽ G
INTERRUPTION

ACTIVATE
KANA-TO-
KANJI
CONVERTING
EVENT FROM
CODE DATA
AND STATE
DATA IN
SHARED
MEMORY

( RETURN )

# FIG.6B

( START )

ACTIVATE
EACH PROCESS

STATE
CHANGED? —— YES

NO

MAKE
KANA-TO-
KANJI
CONVERSION
FROM CODE
DATA IN
SHARED
MEMORY

STORE AGAIN
STATE DATA
IN SHARED
MEMORY

INTERRUPTION
TO LOW ORDER
MODULE

Ⓒ

# FIG.7

EP 0 319 280 A2